(19) **Europäisches Patentamt / European Patent Office / Office européen des brevets**

(11) **EP 1 293 072 B1**

(12) **EUROPEAN PATENT SPECIFICATION**

(45) Date of publication and mention
of the grant of the patent:
**11.07.2007 Bulletin 2007/28**

(21) Application number: **01937059.2**

(22) Date of filing: **22.05.2001**

(51) Int Cl.:
***H04L 12/64*** *(2006.01)*

(86) International application number:
**PCT/SE2001/001140**

(87) International publication number:
**WO 2001/093516 (06.12.2001 Gazette 2001/49)**

(54) **ARRANGEMENT AND METHOD RELATING TO COMMUNICATION OF SPEECH**

ANORDNUNG UND VERFAHREN IN BEZUG AUF DIE VERMITTLUNG VON SPRACHE

SYSTEME ET PROCEDE CONCERNANT LA COMMUNICATION DE LA PAROLE

(84) Designated Contracting States:
**AT BE CH CY DE DK ES FI FR GB GR IE IT LI LU MC NL PT SE TR**

(30) Priority: **31.05.2000 SE 0002016**

(43) Date of publication of application:
**19.03.2003 Bulletin 2003/12**

(73) Proprietor: **TELEFONAKTIEBOLAGET LM ERICSSON (publ)**
**164 83 Stockholm (SE)**

(72) Inventors:
• **SUNDQVIST, Jim**
**S-976 32 Lulea (SE)**

• **LENNESTAL, Hakan**
**S-972 35 Lulea (SE)**
• **NOHLGREN, Anders**
**S-972 42 Lulea (SE)**
• **LINDQVIST, Morgan**
**S-172 78 Sundbyberg (SE)**
• **WANG, Wei**
**S-132 35 Stockholm (SE)**

(74) Representative: **Lövgren, Tage**
**Ericsson AB,**
**Patent Unit Service & Backbone Networks**
**126 25 Stockholm (SE)**

(56) References cited:
**WO-A1-00/42749          WO-A1-95/22233**
**WO-A1-96/15598**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

The present invention relates to an arrangement, particularly a receiving terminal unit, (or more generally, a terminal, acting as a receiver) in a communication system supporting packet based communication of speech and data, e.g. an IP-network. The arrangement, or receiving terminal unit, includes receiving means, speech decoding means and a jitter buffer for handling delay variations in the reception of a speech signal consisting of packets containing frames with encoded speech. The invention also relates to an arrangement for improving the handling of delay variations in a jitter buffer in a terminal unit in a communication system supporting packet based communication of speech and data. The invention also relates to a method of adapting the size of a jitter buffer in a terminal unit in a communication system supporting packet based communication of speech and data.

STATE OF THE ART

An area that undergoes a fast development within telecommunications relates to voice over IP (the TCP/IP, Transmission Control Protocol/Internet Protocol, suit). Initially one of the main reasons for finding it so attractive was that it would be possible to make phone calls at a very low cost. However, later on it was realized that the technology had much more potential. Now it can be seen that it is very promising for new and different business applications within the telecommunication area. Since both speech and data use the same network and the same transmission protocol, it will be much easier to implement for example different information applications like call center, call screen, unified messages etc. than it is with traditional telecommunication technologies. For the application of voice over IP, voice or speech data is grouped to form packets and sent to shared, common networks. Due to the nature of such networks, however, specific technical problems are encountered, like the loss of packets, delay of packets and jitter that often occurs.

Jitter can be described as the variation in arrival of consecutive packets. A real-time service like voice typically sends a packet with encoded speech every 20 ms corresponding to 160 samples when using a sampling frequency of 8 kHz. Since the delay varies throughout the network, different packets will be delayed differently. Moreover, the clock of a transmitting terminal unit is not synchronized to the clock of a receiving terminal unit. In order to smooth out the delay variations, a receiving arrangement or the receiving part of a terminal which in general functions both as a receiver and a transmitter usually is provided with a so called jitter buffer. The size of the jitter buffer is important from the speech quality point of view.

If the size of the jitter buffer is too large, the one-way delay from mouth to ear will be too large and the perceived quality will be degraded. ITU-T Recommendation G.114 "One-way transmission time", ITU-T 1996, for example states that the one-way delay should be less than 150 ms for a regular telephony service. If, on the other hand, the jitter buffer is too small, packets which are delayed more than the size of the jitter buffer, will be seen as lost since they arrive too late to be used for any speech synthesis.

Therefor an adaptive jitter buffer is wanted to balance the size of the jitter buffer, i.e. the delay at the receiving side against packet loss. The delay may also vary with time. In order to be able to handle these variations the size of the jitter buffer, i.e. the number of samples the speech parameters in it would represent, needs to be adaptable accordingly. The jitter buffer can be measured and adapted in different ways. It is known to measure the jitter buffer through checking the maximum variations in arrival times for the received packets. The means for performing the actual jitter buffer adaptation can be of different kinds. For examples it is known to perform a jitter buffer adaptation through using the beginning of a talkspurt to reset the jitter buffer to a specified level. The distance, in number of samples, between two consecutive talkspurts, i.e. when there is silence, is increased at the receiving side if the jitter buffer is too small and the number of samples is decreased if the jitter buffer is too large. Through this action the size of the jitter buffer will be adapted. In IP telephony solutions using the RTP protocol (Real Time Protocol), c.f. "RTP; A Transport Protocol for Real-Time Applications", RFC1889, IETF, January 1996 by H. Schulzrinne et al., the marker flag in the RTP header is used to identify the beginning of a talkspurt and the size of the jitter buffer can be changed when such a packet arrives at the receiving side.

Related prior art is disclosed in WO 96/15598, describing an audio transceiver, which on the receiving side controls the amount of audio data in the buffer of a audio device.

However, it is a drawback of a solution as referred to above in that the resetting of the jitter buffer to a certain level at the beginning of each talkspurt is too static. It does for example not cover the case when the network conditions change or if the wrong decision has been taken. If the jitter buffer size becomes too small, packets will be lost and if the jitter buffer becomes too large, an unnecessary delay is introduced. In both cases the perceived speech quality will be affected which is

disadvantageous. Since the jitter buffer is adapted only when there actually is a speech silence period, the problems will be even more severe if the periods with speech are long since then there will be no possibility to perform an adaptation during all that time.

SUMMARY OF THE INVENTION

Therefore a (receiving) terminal unit in a communication system as referred to above is needed through which the variation in arrival time (i.e. that packets arrive irregularly) between consecutive packets can be handled in an efficient manner. A terminal unit is also needed through which the perceived speech quality will be good, particularly improved as compared to for hitherto known receiving terminal units. A (receiving) terminal unit is also needed through which it is possible to smooth out delay variations, i.e. through which jitter can be handled, in which the size of the jitter buffer can be adapted in an efficient manner. A receiving terminal is also needed which contains a jitter buffer which is adaptive such that the balance between the delay at the (receiving) side and the loss of packets is optimized. A receiving terminal unit with a jitter buffer is also needed which enables the fulfilment of any requirements and recommendations relating to regular telephony services and for which the adaptation of the jitter buffer can be performed in an easy manner. It should be clear that, when referring to a receiving terminal unit, is generally meant the receiving functionality of a terminal unit since mostly a terminal unit acts both as a receiver and as a transmitter.

A jitter buffer is in this application given a broad interpretation in that it may refer to (which mostly is the case) the conventional jitter buffer where packets are stored before fetching by the decoding means, but it may in some embodiments also relate to storing/buffering means wherein speech is stored in its decoded form, i.e. after decoding in the decoding means. This is applicable when decoding is performed substantially as soon as packets are received in the receiving terminal. This is what is meant by functional size of a jitter buffer.

Moreover an arrangement and a method of adapting the (functional) size of a jitter buffer in a terminal unit in a communication system supporting packet based communication of speech and data are needed through which jitter buffer adaptations can be performed in an efficient and easy manner. A method is also needed through which the delay variations in the reception of consecutive packets containing speech can be smoothed out. Moreover a method is needed through which a good speech quality can be provided and through which the risk of loosing packets is reduced. Still further a method is needed through which the perceived speech quality at the (receiving) terminal unit can be improved as compared to hitherto known methods. A method is also needed through which the jitter buffer handling capability within a terminal unit can be improved and facilitated, particularly optimized.

Therefore a terminal unit as initially referred to is provided which includes receiving means, speech decoding means and a jitter buffer in which packets containing frames with encoded speech are received. I.e. it receives packets from the network comprising speech parameters representing one or more speech frames comprising a number of samples. It further includes jitter buffer control means for keeping information about the size of the jitter buffer and for providing the speech decoding means with control information such that the speech decoding means based on said information including information about the received (encoded or decoded) speech signal, provides for a dynamical adaptation of the size of the jitter buffer by modification of the received, packetized speech signal. According to different embodiments the speech signal is modified during the decoding step, or after decoding.

In a preferred embodiment the jitter buffer control means uses information on the current size of the jitter buffer and on the desired (default) size of the jitter buffer to determine if, and how, the jitter buffer size needs to be adapted.

A packet particularly contains a number of speech frames, one or more, each of which speech frames contains a number of parameters representing speech. In a particular implementation a received packet consists of one speech frame representing for example 160 samples when decoded. According to the invention, particularly the speech signal is compressed or extended in time to in this way adapt the functional size of the jitter buffer. The current size of the jitter buffer particularly is represented by the number of samples that remains in the receiving terminal unit until the received packet has to be fetched by the decoding means and the desired (default) size of the jitter buffer is represented by the number of samples that should remain in the receiving terminal unit until the received packet has to be fetched by the decoding means.

In particular the invention relates to the functional size of the jitter buffer which is relevant when the speech decoding means actually fetches packets substantially as soon as they arrive, decodes them, and stores them before delivery to the D/A converter. This storing after decoding corresponds to the actual storing in the jitter buffer, hence the terminology functional size of the jitter buffer is used, since the inventive concept also covers such embodiments. Then however adaptation is somewhat delayed since adaptation of the size is done in relation to the subsequent packet.

Particularly, for controlling the size of the jitter buffer, a number of samples are added/removed upon decoding a packet in the decoding means. In a particular implementation, for adapting the size of the jitter buffer alternatively a number of pitch periods (or a number of samples representing one or more pitch periods) are added/removed when decoding. Still further the number of frames that a packet contains may be increased or decreased depending on whether the size of the jitter buffer needs to be increased or reduced.

Advantageously the jitter buffer control means detects the arrival times of packets at the jitter buffer and the time at which packets are fetched by the decoding means for determining if, and how, the jitter buffer size needs to be adapted. Feedback means are provided to inform the jitter buffer control means about the current jitter buffer size such that the control means always is provided with updated information with respect to the jitter buffer size. Via the feedback means information is particularly provided to the control means about how many samples/frames/pitch periods that were added/removed from packet at the latest adaptation of the jitter buffer size. Alternatively, if all the intelligence resides in the control means, there is no need to transfer the information, since it is already available to the control means. In a particular implementation, for altering the number of samples or pitch periods, the currently received packet is used. Alternatively, for adding a frame to a packet, the parameters of a number of the preceding frames are used to synthesize a new frame. Alternatively, for insertion of a frame, parameters of a preceding frame and of a subsequent frame can be used in an interpolation step to provide a new frame. For deleting a frame, the subsequent frame is advantageously deleted from the jitter buffer.

In a particular implementation the decoding means comprises a CELP-decoder or similar, and already existing control means thereof are used as jitter buffer control means. In an alternative implementation means are provided for performing an LPC-analysis to provide an LPC-residual and for performing an LPC-synthesis.

Therefore also a method of adapting the (functional) size of a jitter buffer in a terminal unit in a communication system supporting packet based communication of speech and data is provided which comprises the steps of; receiving a speech signal with encoded speech in packets from a transmitting side in a jitter buffer of a receiving terminal unit; storing the packets in the jitter buffer; fetching packets from the jitter buffer to speech decoding means. The method further comprises the steps of; detecting if the functional size of the jitter buffer needs to be increased or decreased; if yes, extending/compressing the received speech signal in time through controlling the number of samples the speech frames stored in the jitter buffer would represent when decoded. Particularly the method comprises the step of, to extend/compress the speech signal; increasing/decreasing the rate at which the decoding means fetches packets from the (actual) jitter buffer, (or alternatively the rate at which the decoding means outputs frames in the case when decoding is done substantially as soon as a packet arrives to the jitter buffer). In a particular implementation the method comprises the step of; for adapting the size of the jitter buffer; adding/deleting one or more samples when a packet is decoded in the decoding means. In an alternative embodiment the method includes the step of; adding/removing one or more pitch periods upon decoding in the decoding means. In still another implementation the method includes the step of; adding/removing one or more frames to/from a packet. (An additional frame is then introduced between two packets. The additional frame will generate a speech frame comprising N samples, e.g. 160 samples.)

Advantageously the method comprises the step of (relevant to any of the preceding embodiments) detecting in automatic control means the arrival times of packets to the jitter buffer and the times at which packets are fetched by the decoding means, to determine if, and how, the jitter buffer size needs to be adapted. Instead of detecting when packets are fetched by the decoding means, according to an alternative embodiment, it is determined when the decoding means has to output a packet to D/A converting means (e.g. from a play-out buffer associated with the decoding means).

The method preferably comprises the step of; dynamically adapting the size of the jitter buffer through increasing/decreasing the rate at which the decoding means fetches packets from the jitter buffer. According to one embodiment it comprises the step of using a CELP- or CELP-like decoder for adaptation control thus using existing LPC parameters giving an LPC-residual. In an alternative embodiment an LPC-analysis is performed to provide an LPC-residual before adding/removing samples/frames/pitch periods, performing an LPC-synthesis.

Therefore also an arrangement for improving the handling of delay variations of a jitter buffer in a terminal unit in a communication system supporting packet based communication of speech and data is provided wherein packets with frames (one or more) of encoded speech are received in the jitter buffer from a transmitting terminal unit at a varying first frequency and wherein speech decoding means fetches packets from the jitter buffer with a second frequency. The arrangement comprises jitter buffer control means to dynamically control the second frequency with which the decoding means fetches packets from the jitter buffer such that the size of the jitter buffer can be changed or adapted. The frequency at which fetching of packets is performed is controlled through increasing/decreasing the number of samples/pitch periods/frames contained in a packet when decoded in the decoding means.

BRIEF DESCRIPTION OF THE DRAWINGS

The invention will in the following be further described, in a non-limiting manner and with reference to the accompanying drawings, in which:

Fig. 1      shows a speech signal in the time domain,

Fig. 2      shows an LPC-residual of a speech signal in the time domain,

Fig. 3      shows an analysis-by-synthesis speech encoder with an LTP-filter,

Fig. 4      shows an analysis-by-synthesis speech encoder with an adaptive codebook,

Fig. 5      is a very schematical block diagram of two telecommunication units, one of which acts as a transmitting arrangement transmitting a signal over the network to the other acting as a receiving arrangement,

Fig. 6 is a block diagram illustrating the parts of a terminal unit relevant for adaptation of the jitter buffer according to the invention,

Fig. 7A illustrates an original sequence of two speech frames,

Fig. 7B illustrates insertion of a frame to the sequence of Fig. 7A,

Fig. 8A illustrates an original waveform sequence,

Fig. 8B illustrates insertion of a pitch based waveform segment to the sequence of Fig. 8A,

Fig. 9A illustrates an original waveform,

Fig. 9B illustrates insertion of a waveform segment to the waveform of Fig. 9A, and

Fig. 10 is a flow diagram describing the functioning of the jitter buffer control means.

## DETAILED DESCRIPTION OF THE INVENTION

In a packet based communication system supporting packed based communication of speech and data, a first terminal unit, when acting as a transmitting communication unit, samples input speech comprising a number of speech parameters, (e.g. three types of parameters), which here represent a speech frame comprising a number of samples, e.g. 160 samples for a 20 ms speech frame and if a sampling rate of 8 kHz is used, which parameters are packetized in packets and transmitted over the network to a receiving terminal unit which should play up the recreated, decoded, speech signal with a sampling rate of e.g. 8 kHz. At the receiving side the packets are thus unpacked. However, as referred to earlier in the application, the delays with which packets are received on the receiving side may be different from one packet to another since some of the packets are transmitted quickly over network whereas others are transmitted slowly. Moreover the clocks of the transmitting and receiving terminal respectively are not synchronized. If a subsequent packet has not arrived when the preceding packet already has been played out, this will be perceived as a disturbance by the user of the receiving unit. The jitter buffer is used to handle the delay variations and it is important that all the time there is something to play up.

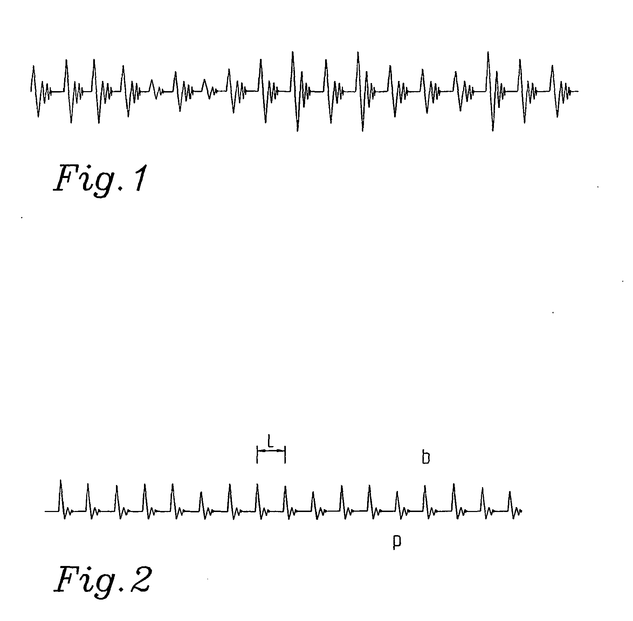

For explanatory reasons, Fig. 1 shows a typical segment of a speech signal in the time domain. This speech signal shows a short-term correlation corresponding to the vocal tract and a long-term correlation corresponding to the vocal cords. The short-term correlation can be predicted by using an LPC-filter and the long-term correlation can be predicted through the use of an LTP-filter. LPC means linear predictive coding and LTP means long-term prediction. Linear in this case implies that the prediction is a linear combination of previous samples of the speech signal.

The LPC-filter is usually denoted:

$$H(z)\frac{1}{A(z)} = \frac{1}{1 - \sum\limits_{i=1}^{n} a_i z^{-i}}$$

Through feeding a speech signal through the LPC-filter, H(z) the LPC residual, $r_{LPC}(n)$, is found. The LPC residual shown in Fig. 2 contains pitch pulses P generated by the vocal cords. The distance between two pitch pulses is a so called lag. The pitch pulses P are also predictable, and since they represent the long-term correlation of the speech signal, they are predicted through a long-term predictor, i.e. an LTP-filter given by the distance L between the pitch pulses P and the gain b of a pitch pulse P. The LTP filter is commonly denoted:

$$F(z) = b \cdot z^{-L}$$

When the LPC-residual is fed through the inverse of the LTP-filter F(z), an LTP-residual $r_{LTP}(n)$ is created. In the LTP-residual the long-term correlation in the LPC-residual is removed, giving the LTP-residual a noise-like appearance.

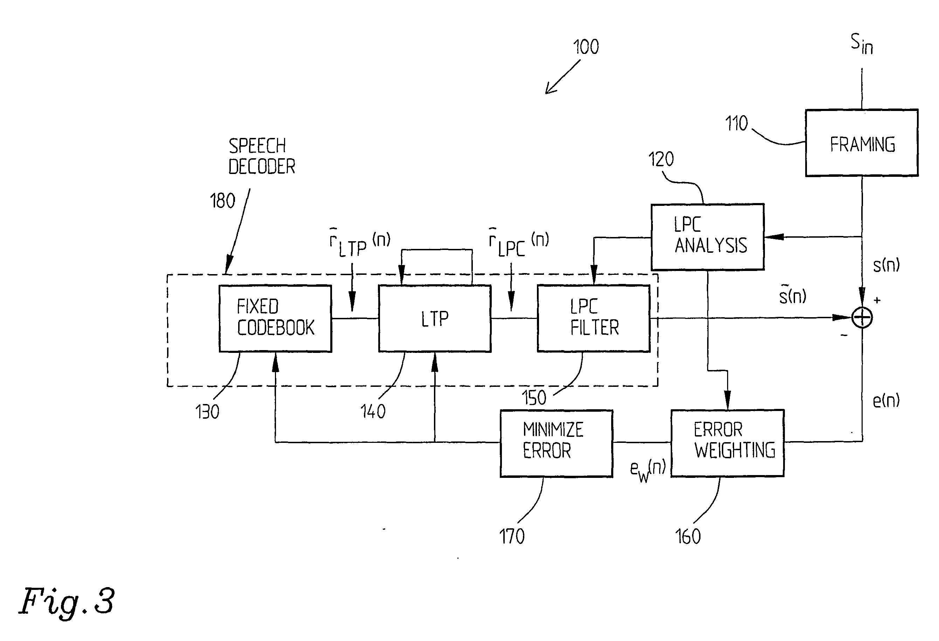

Many low bit rate speech coders are so called hybrid coders. In Fig. 3 an analysis-by-synthesis speech encoder 100 with LTP-filter 140 is illustrated. The vocal tract is described with an LPC-filter 150 and the vocal cords is described with an LTP-filter 140 while the LTP-residual $\hat{r}_{LTP}(n)$ is waveform-compared with a set of more or less stochastic codebook vectors from the fixed codebook 130. The input signal $I_{IN}$ is divided into frames 110 with a typical length of 10-30 ms. For each frame an LPC-filter (a short-term predictor) 150 is calculated through an LPC-analysis 120 and the LPC-filter 150 is included in a closed loop to find the parameters of the LTP-filter 140, i.e. the lag portion and LTP gain, the fixed codebook, codebook index and codebook gain. The speech decoder 180 is included in the encoder and consists of the fixed codebook 130 which output $\hat{r}_{LTP}(n)$ is connected to the LTP-filter 140 the output $\hat{r}_{LTP}(n)$ of which is connected to the LTP-filter 140, the output of which $\hat{r}_{LPC}(n)$ is connected to the LPC-filter 150 generating an estimate $\hat{s}(n)$ of the original speech signal $S_{IN}(n)$. In the analysis to find the best set of parameters to represent the original sequence, the parameters of the fixed codebook, the gain and the long term predictor are thus combined in different ways to generate different synthesized signals. Each estimated signal $\hat{s}(n)$ is compared with the original speech signal $S_{IN}(n)$ and a difference signal e(n) is calculated. The difference signal e(n) is then weighted in 160 for calculation of a perceptual weighted error measure $e_w$(n). The set of parameters giving the least perceptual weighted error measure $e_w$(n) is transmitted to the receiving side 170. This method, analysis by synthesis, thus consists in comparing different synthesized signals and selecting the best match.

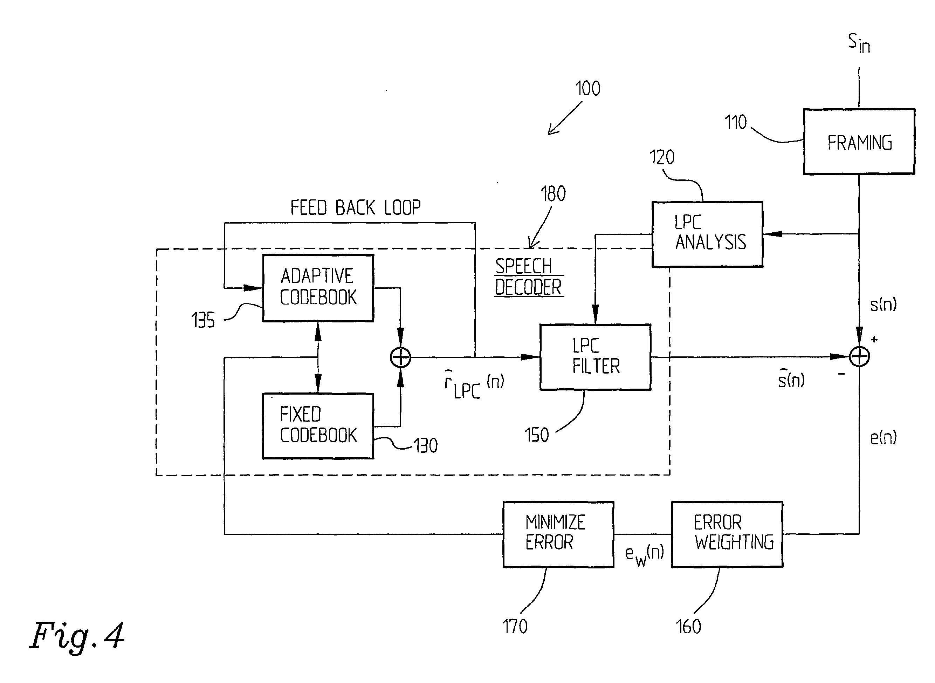

Fig. 4 shows another type of analysis-by-synthesis speech encoder 100 in which the LTP filter of Fig. 3 (140) is exchanged through an adaptive codebook 135. The LPC-residual $\hat{r}_{LPC}(n)$ is the output from the sum of the adaptive and the fixed codebooks 135 and 130. All other elements have the same functionality as in Fig. 3 showing the analysis-by-synthesis speech encoder with LTP-filter 140.

The above brief summary of the functioning of speech coding with reference to Figs. 3 and 4, is included merely for the purposes of giving an understanding of the methods that will be described in relation to the present invention. In real implementations, much work is spent on reducing the complexity and on increasing the perceived speech quality. This is however not part of the present invention. Any type of speech coding may be implemented, e.g. methods for improving the speech quality as disclosed in the Swedish patent application "Method and apparatus in a telecommunications system", application number 9903223-7, filed on 1999-09-09 and which herewith is incorporated herein by reference.

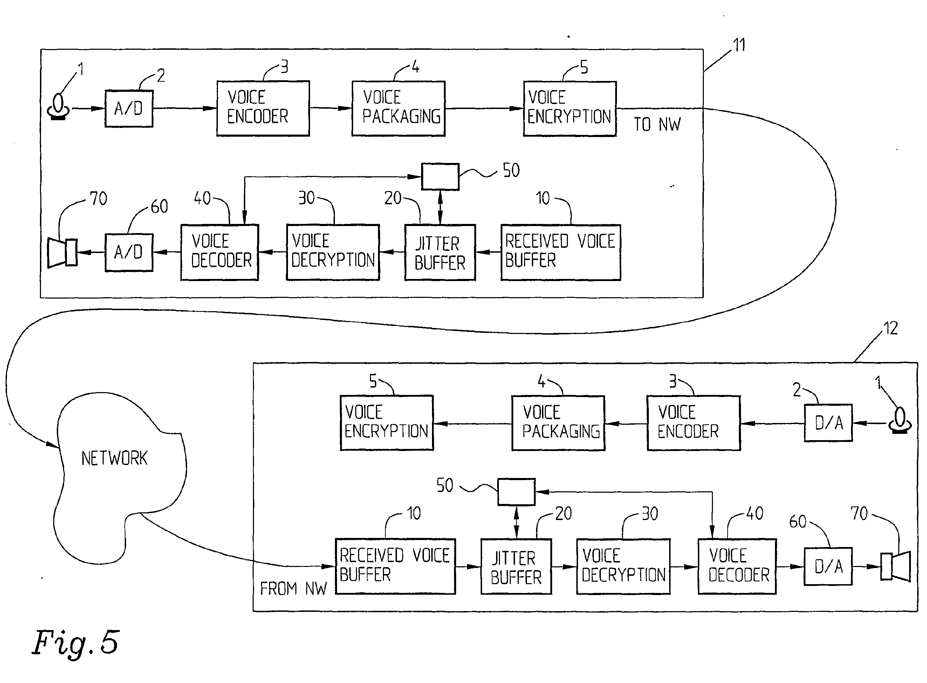

Fig. 5 very schematically illustrates block diagrams of two telephone units, e.g. IP-phones, each of which of course is able to act both as a transmitter and a receiver, but in this figure one of the telephone terminal units 11 is supposed to act as a transmitter transmitting a signal to another telephone terminal unit 12 acting as a receiving telephone. The terminal units 11, 12 in a conventional manner include a microphone 1, A/D converting means 2, voice encoding means 3, voice packaging means 4 and voice decryption means 5, for transmitting a signal over the network to another terminal unit 12 or transceiver means. The voice decryption means are of course not necessary for the functioning of the present invention.

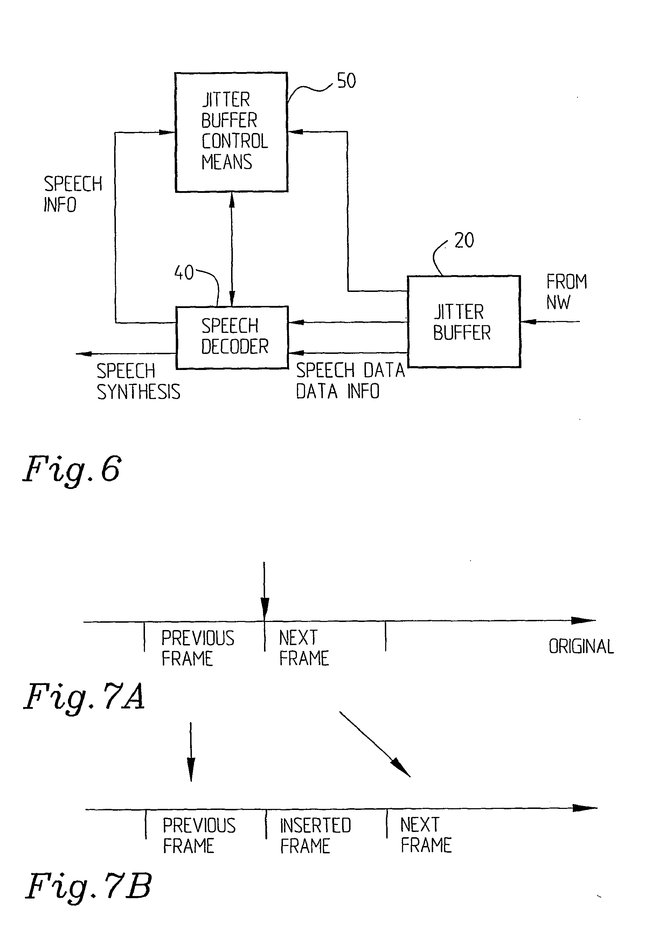

The receiving part of it comprises a voice buffer 10 for receiving signals from the network, a jitter buffer 20 for handling the delay variations in the reception of packets over the network, voice decryption means 30 and voice decoding means 40, a D/A converter 60 and loud speaker means 70. The voice buffer and the jitter buffer may also consist of one common unit, simply denoted jitter buffer. In the figure is schematically indicated jitter buffer control means 50 communicating with the jitter buffer 80 and the voice decoder 40 used to control the adaptation of the size of the jitter buffer 20 as will be further explained with the reference to Fig. 6.

According to one embodiment of the present invention, the decoding means at the receiving side comprises a CELP-decoder or a CELP-like decoder. In that case, the adaptation control can be performed using the characteristics and the means of such decoder. According to other embodiments, the conventional, or any decoding means are used and, according to the inventive concept, the characteristics of the input speech signal is used for the adaptation. In both cases, the inventive concept is based on the input speech signal which can be said to be either expended or compressed in time in order to provide for the appropriate adaptation of the jitter buffer (i.e. the size of the jitter buffer).

Fig. 6 is a schematical block diagram which is simplified in so far as it only illustrates those parts of the receiving unit that actually are involved in the adaptation of the jitter buffer according to some embodiments of the invention. Thus it is supposed that input to the jitter buffer are packets from the network (e.g. from a terminal unit acting as transmitter), and the packets from the network comprises speech parameters representing one or more speech frames each comprising a number, N, of samples, e.g. 160 samples if a sampling frequency 8 kHz is implemented. Thus, packets are stored in the jitter buffer 20 and the jitter buffer must have a certain size in order to enable a continuous flow to the speech decoder 40. (Of course other sampling frequencies can be used.)

If for example the size of the buffer is too small, there is nothing to play out which may be the case if the delay in the network is too long. According to the invention, the jitter buffer size will then be increased. If the speech decoder wants to play out with a frequency of 8 kHz it fetches packets, e.g. normally comprising 160 samples, from the jitter buffer, synthesizes speech and plays it out. If for example the size of the jitter buffer is fixed and corresponds to 160 samples, it is not possible to change the size of the jitter buffer and a packet will be fetched every 20 ms. If however, according to the invention, it is detected that the jitter buffer size needs to be increased, then for example the speech decoder does not fetch the packet after 20 ms but instead after 22 ms, i.e. it waits two more milliseconds until it fetches the next packet.

According to one implementation samples are then added in the decoding means which in principle means that the speech signal is extended through two ms. For example one or more pitch periods can be added or e.g. 16 samples during a given period. Thus, a packet is fetched which contains a number of speech parameters. Normally the parameters would be converted to a number of samples, typically e.g. 160 samples. If an adaptation of the size of the jitter buffer is needed, the amount of samples that the parameters represent can be changed and then samples, pitch periods or frames can be added/removed in the decoding means or frames can be added/removed in the jitter buffer. This means that the time period until the subsequent packet is fetched is prolonged or shortened. If the time period is prolonged, the size of the jitter buffer is increased, and vice versa, if the time period is shortened, the size of the jitter buffer is reduced.

Returning to Fig. 6, according to the invention, the jitter buffer control means 50 keeps information about the current size of the jitter buffer corresponding to the number of samples the parameters in the jitter buffer would represent after decoding and of the default jitter buffer size corresponding to the default or desired size of the jitter buffer 20 corresponding to the number of samples the parameters should represent after decoding. In a preferable implementation the jitter buffer control means 50 detects the times at which packets arrive and the time when packets are fetched by the speech decoder 40. At the input side the time varies i.e. the frequency varies due to the delay variations. A solution is then to fetch packets more or less often, to dynamically adapt the rate at which packets are fetched. Thus, using the information on arrival times of packets to the jitter buffer and the times when packets are fetched by the decoding means, the jitter buffer control means 50 determines if, and how, the jitter buffer 20 size needs to be adapted. Thus, in an advantageous implementation information about the speech signal is provided from the speech decoder 40 to the jitter buffer control means 50, e.g. containing an analysis of the speech signal content, which information comprises input data to be used in the decision as to when, if, and how the adaption is to be performed. The adaption, or modification, may be done during the decoding step, or after decoding. Information relating to the speech signal, on which the modification decision is based, may relate, in different embodiments, to the encoded or to the decoded speech signal. This procedure will be further described below. Control information relating to the decision that has been made is forwarded to the speech decoder 40, in this implementation. Thus, whenever the speech decoder needs a speech analysis frame to process for speech synthesis generation, the speech decoder means 40 extracts the frame from the jitter buffer 20 together with data information. The data information may for example be estimated bit rate within the frame etc.

As referred to above, in parallell, the speech decoder 40 also gets the control information from the jitter buffer control means 50 as to whether or not it should modify the current frame. If the control information says that a modification is needed, information is also contained relating to how the frame should be modified i.e. expanded or compressed, and the kind of modification, i.e. if for example a single sample is to be added/removed, if one or more pitch periods is/are to be added or removed, or if a frame (or more than one frame) is to be added or removed. In a particular embodiment a modification is performed within the current frame or packet in the most appropriate way. According to one embodiment the intelligence lies in the jitter buffer control means. Alternatively the functionality of the jitter buffer control means may be provided in the speech decoder. Still further the control functionality and the intelligence may be distributed between the speech decoder and the jitter buffer control means. Then e.g. information about the result of an intended modification etc. is provided from the speech decoder to the jitter buffer control means.

A modification can be done in different ways, e.g. through extracting or compressing the speech signal depending on whether the size of the jitter buffer needs to be increased or decreased and the speech signal can be extracted or compressed in different ways. One way is to insert/delete one or more samples. It is also possible to insert or delete one or more pitch periods (which actually also is an insertion/deletion of a number of samples). Still further it is possible to insert/delete one or more frames, i.e. also that being an insertion/deletion of a number of samples which is the most general definition. Even if a speech signal can be extracted or compressed in other ways, these are the most appropriate ways for the inventive purpose.

As soon as the speech signal is extracted or compressed in time, the jitter buffer size will be affected indirectly since the play back point of the next speech frame is adjusted. However, the methods disclosed therein were evaluated for compensation of clock drift in the sampling frequency between the sending and the receiving side to avoid starvation in the play out buffer or to avoid an increasing delay. Starvation will occur if the receiving side has a higher sampling rate than the sending side and the delay will increase if the receiving side has a lower sampling rate than the sending side. According to the inventive concept, these methods can be used for jitter buffer adaptation.

Hence, the jitter buffer size can be adapted in different ways using sample, pitch or frame insertion/deletion.

In case the modification should be a frame insertion (as e.g. decided by the control means 50) this can be provided for in different ways. In one embodiment the parameters of a previous frame are repeated and used during the synthesis of the inserted frame. Alternatively, corresponding to an advantageous implementation, a set of parameters are used during the synthesis of the inserted frame that has been derived from interpolation of parameters from the previous frame and the next frame respectively. To do so is known per se but for another purpose, i.e. to conceal lost frames (Error Concealment Units).

Figs. 7A, 7B schematically illustrates insertion of a frame. In Fig. 7A a portion of an original frame sequence is illustrated in which a previous frame is indicated as well as a next frame. In Fig. 7B is shown how the inserted frame is introduced between the previous frame and the next frame.

If a frame is to be deleted, then the next subsequent frame may be deleted from the jitter buffer and a smoothing action is performed in the next frame.

From the speech decoder 40 speech information and synthesized speech is output. The speech information comprises a number of samples that have been generated, information of about how many samples are comprised in a pitch period as well as other characteristics of the speech, e.g. if the speech is voiced or unvoiced. The jitter buffer control means 50 uses the speech information for taking the decision about which, if any, modification that needs to be done. Normally the pitch period will be between substantially 20 and 140 samples if a sampling information frequency of 8 kHz is used. Since the pitch period is quasi-stationary, at least during voiced segments of the speech, the jitter buffer controller means 50 will obtain a rough estimate on what the pitch period will be through considering the pitch periods of previous frames. Based on this information, the jitter buffer control means 50 is able to decide if a pitch based action or if a frame based action is the most appropriate. The result of the modification is given by the speech decoder 40 after the modification action has been done. The size of the speech synthesis frame will vary depending on which action is taken. For a single sample insertion/deletion the value will be framesize+1 and framsize-1 respectively. For a frame insertion/deletion, the value will be 2xframesize and 0 respectively. For the action pitch insertion/deletion, the size of the speech synthesis frame will vary depending on which pitch period that actually has been inserted or removed.

The jitter buffer control means 50 uses two values to make a decision relating to adaptation as briefly mentioned in the foregoing. The first value is a current size of the jitter buffer which is represented by the number of samples that remains in the receiving terminal unit until the received packet has to be fetched by the decoding means. The second value is the default size, which is represented by the number of samples that should remain in the receiving terminal unit until the received packet has to be fetched by the decoding means. If the current size differs too much from the default size to allow adaptation within one and the same speech frame, subsequent frames will be used to adapt the size of the jitter buffer 50.

In embodiments in which the receiving terminal unit, i.e. in other words the receiving part of a terminal unit, since the terminal actually acts both as a receiver and a transmitter, contains a decoder which is not a CELP-decoder or a decoder of a similar type, it should be obvious for anyone skilled in the art of speech processing that the same methods as referred to above can be used through introducing some additional steps, namely those of performing an LPC analysis to achieve a LPC residual, and then perform the same actions as described above of insertion/deleting one or more samples, frames or pitch periods, and then to do an LPC synthesis. In the patent application "Method and apparatus in a telecommunication system" referred to above sample rate conversion methods are described.

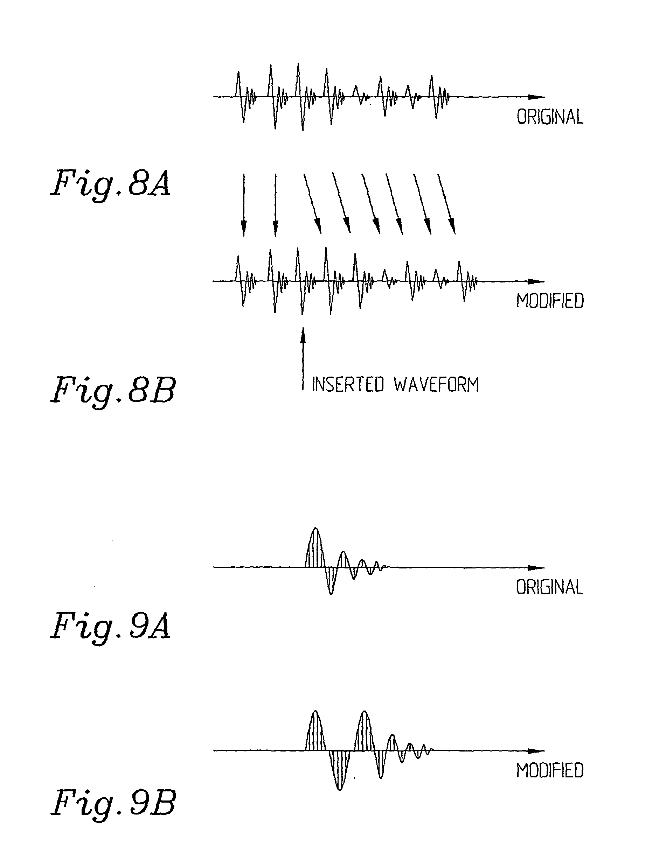

The inventive concept can be implemented in an even more general way in case no CELP-like decoder is available. General methods are described which can be used in an arrangement/method according to the present invention. In a most simple embodiment a single sample is then inserted or deleted on the raw speech signal. In this case a framing of the speech signal is made. Samples to remove are selected in a manner so as to avoid segments with more information, i.e. where the signal varies rapidly. However, cautiousness should be used when implementing this method since if insertion/ deletion is made too often, the speech quality will run the risk of being deteriorated. If there is a need for a faster adaptation on the raw speech signal, a segment of the waveform can be repeated as schematically illustrated in Figs. 8A,8B wherein Fig. 8A shows an original waveform sequence and Fig. 8B illustrates how a pitch based waveform is inserted. The repetition may be a full pitch period, but it can also be limited to a single wave as illustrated very schematically in Fig. 9B. Fig. 9A illustrates the original waveform whereas Fig. 9B illustrates the modified waveform wherein a waveform segment has been inserted.

Thus according to the invention, the concept can be implemented when CELP or CELP-like decoders are available, when other decoders are available using a pseudo-CELP approach as described above, or, insertions/deletions can be done to/from the speech signal itself.

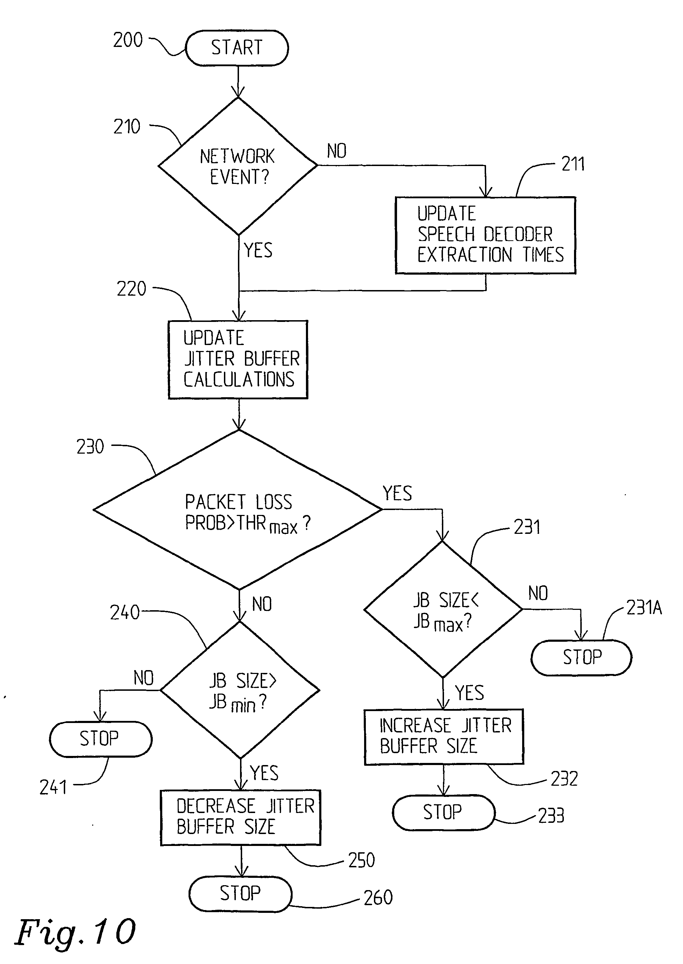

Fig. 10 is a flow diagram describing the flow of the jitter buffer control means 50. It functions as follows: From the start, 200, is examined if there has been a network event, 210. This means in other words that it is examined if a packet has arrived. If not, the speech decoder is updated as far as the extraction times are concerned, 211, which means that it has to be aware of the fact that for another time period no packet has arrived. If however it was established that a packet arrived, the jitter buffer calculations are updated, 220.

The calculations of the size of the jitter buffer can be done in different ways. One way to calculate it is to have a sliding average where it for every packet can be seen how much time there is left until an incoming packet is to be used for speech synthesis. For consecutive packets this will of course vary, but through taking a number of values, for examples the ten last values, and then form the average, it is possible to see if the jitter buffer tends to be too large or too small or if it appears to have the appropriate size. It is then established if the packet loss probability exceeds a maximum threshold value $THR_{max}$, 230. Also this value depends on the situation. $THR_{max}$ is the probability threshold that should be observed i.e., it should not be exceeded, in order to provide a sufficient speech quality but it varies depending on which speech decoder that actually is used. The jitter buffer minimum size $JB_{min}$ is the smallest size the jitter buffer should have depending on the varians in the delay variation of incoming packets. The jitter buffer also has

a maximum value $JB_{max}$ which should not be exceeded, otherwise the speech quality would be negatively affected. Delay variation is the calculated variation of the interval between two consecutive packets. If the jitter buffer size is smaller than the maximum jitter buffer size $JB_{max}$, 231, the jitter buffer size should be increased, 232, and then the procedure is stopped, 233, until being repeated again from 200 above. If however the jitter buffer size is not smaller than the maximum, nothing is done, 231A, until the procedure is repeated again from 200 above. If however it was established that the probability of loosing packets was smaller than the maximum threshold value $THR_{max}$ (230), is examined if the jitter buffer size exceeds the minimum jitter buffer size $JB_{min}$, 240. If yes, the jitter buffer size is decreased, 250, and then nothing is done, 260, until the procedure is repeated again from 200 above. If it was established that the jitter buffer size did not exceed the minimum size, nothing is done, 241, until the procedure is repeated from 200 above.

It should be clear that the invention is not limited to the explicitly described embodiments but that it can be varied in a number of ways within the scope of the appended claims. It is for example not limited to any particular kind of decoding means but it is likewise applicable to so called CELP-decoders or CELP-like decoders as to other decoders. Moreover packet storing can be effected in the physical jitter buffer or after decoding in the decoding means, hence the reference to functional size of the jitter buffer, or functional jitter buffer.

**Claims**

1. A terminal unit (11;12) in a communication system supporting packet based communication, including receiving means, speech decoding means (40) and a jitter buffer (20) for handling delay variations in the reception of a speech signal consisting of packets containing frames with encoded speech, **characterized in that** the terminal unit further comprises jitter buffer control means (50) arranged to adapt the functional size of said jitter buffer (20) by keeping information about the functional size of the jitter buffer and for providing said speech decoding means, further using information about the received, packetized, encoded/decoded speech signal (40), with control information, and **in that** the speech decoding means (40), based on said information, provides for a dynamical adaptation of the size of the jitter buffer (20) by modification of the encoded or decoded speech signal.

2. A terminal unit according to claim 1, **characterized in** **that** the jitter buffer control means (50) uses information on the current size of the jitter buffer (20) and on the desired size of the jitter buffer (20) to determine if and how the jitter buffer size needs to be adapted.

3. A terminal unit according to claim 2, **characterized in** **that** a packet contains a number of speech frames.

4. A terminal unit according to claim 3, **characterized in** **that** a received packet contains one speech frame which, when decoded in the decoding means, represents e.g. 160 samples.

5. A terminal unit according to claim 3 or 4, **characterized in** **that** the current size of the jitter buffer is represented by the number of samples that remains in the receiving terminal unit until the received packet has to be fetched by the decoding means and in that the desired (default) size of the jitter buffer is represented by the number of samples that should remain in the receiving terminal unit until the received packet has to be fetched by the decoding means.

6. A terminal unit according to any one of the preceding claims, **characterized in** **that** the jitter buffer (20) size is adapted through compression or extension of the received speech signal in time.

7. A terminal unit according to any one of the preceding clams, **characterized in** **that** for controlling the size of the jitter buffer (20), the frequency with which the decoding means (50) fetches packets from the jitter buffer is increased/decreased.

8. A terminal unit according to any one of the preceding claims, **characterized in** **that** for adapting the size of the jitter buffer (20), a number of samples are added or removed when a packet is decoded in the decoding means.

9. A terminal unit according to claim 8, **characterized in** **that** for adapting the size of the jitter buffer (20) a number of pitch periods are added or removed when a packet is decoded in the decoding means.

10. A terminal unit according to claim 8, **characterized in** **that** the number of frames in a packet are increased/decreased either in the decoding means or in the jitter buffer.

11. A terminal unit at least according to claim 2,

**characterized in**
**that** the jitter buffer control means (50) detects the arrival times of packets to the jitter buffer and the time at which packets are fetched by the decoding means (40) or need to be output from the decoding means (40) for determining if, and how, the functional size of the jitter buffer size needs to be adapted.

12. A terminal unit according to claim 11,
**characterized in**
**that** feedback means are provided to inform the jitter buffer control means (50) about the current jitter buffer size such that said control means always is provided with updated information with respect to the jitter buffer size.

13. A terminal unit according to claim 12,
**characterized in**
**that**, via the feedback means, information is provided to the jitter buffer control means (50) about how many samples/frames/pitch periods were added/removed at the latest adaptation of the jitter buffer size.

14. A terminal unit according to any one of claims 8-13,
**characterized in**
**that** for changing the number of samples/pitch periods, the currently received packet is used.

15. A terminal unit at least according to claim 9,
**characterized in**
**that** for adding a frame to a packet, the parameters of a number of the preceding frames are used to synthesize a new frame.

16. A terminal unit according to any one of claims 8-11,
**characterized in**
**that** for addition of a frame through insertion of a frame, parameters of a preceding frame and of a subsequent frame are used in an interpolation step to provide a new frame.

17. A terminal unit at least according to claim 9,
**characterized in**
**that** for deleting a frame, the subsequent frame is deleted from the jitter buffer.

18. A terminal unit according to any one of the preceding claims,
**characterized in**
**that** the decoding means (40) comprises a CELP-decoder or similar and in that the existing control means thereof are used as jitter buffer control means.

19. A terminal unit according to any one of claims 1-17,
**characterized in**
**that** it comprises means for performing an LPC-analysis to provide an LPC-residual for performing an LPC-synthesis.

20. A method of adapting the functional size of a jitter buffer in a terminal unit in a communication system supporting packet based communication of speech and data comprising the steps of:

- receiving a speech signal with encoded speech in packets from a transmitting terminal unit in a jitter buffer of a receiving terminal unit,
- storing the packets in the jitter buffer,
- fetching packets from the jitter buffer to speech decoding means,

**characterized in**
**that** it further comprise the steps of:

- detecting (230, 231, 240) if the size of the jitter buffer needs to be increased or decreased using information about the received speech signal, if yes,
- extending/compressing the received speech signal in time by controlling the number of samples the speech frames stored in the jitter buffer would represent when decoded.

21. The method of claim 20, **characterized in**
**that** it comprises the step of; to extend/compress the speech signal:

- increasing/decreasing the rate at which the decoding means fetches packets from the jitter buffer.

22. The method of claim 20 or 21,
**characterized in**
**that** it comprises the step of; for adapting the size (232, 250) of the jitter buffer,

- adding/removing one or more samples when a packet is decoded in the decoding means.

23. The method of claim 20,21 or 22,
**characterized in**
**that** it comprises the steps of; for adapting the size (232, 250) of the jitter buffer,

- adding one or more pitch periods upon decoding in the decoding means if the size of the jitter buffer needs to be increased, and/or
- removing one or more pitch periods in the decoding means, to reduce the size of the jitter buffer.

24. The method of claim 20 or 21,
**characterized in**
**that** it comprises the step of; for adapting the size (232, 250) of the jitter buffer,

- adding/removing one or more frames to/from a packet.

**25.** The method according to any one of claims 20-24, **characterized in that** it further comprises the step of:

- detecting in automatic control means the times of arrival of packets to the jitter buffer and the times at which packets are fetched by the decoding means or need to be output from the decoding means to determine if and how the jitter buffer size needs to be adapted.

**26.** The method of any one of claims 19-24, **characterized in that** it comprises the step of:

- using a CELP- or CELP-like decoder for adaptation control thus using existing LPC parameters giving an LPC-residual.

**27.** The method of anyone of claims 20-25, **characterized in that** it comprises the steps of:

- performing an LPC-analysis to obtain an LPC-residual before inserting/removing samples/frames/pitch periods,
- performing an LPC-synthesis.

**Patentansprüche**

**1.** Eine Terminaleinheit (11; 12) in einem Kommunikationssystem, welches Paket basierende Kommunikation unterstützt, mit Empfangsmitteln, Sprachdekodierungsmitteln (40) und einem Jitter-Buffer (20) zur Anwendung auf verzögerungsvariationen bei dem Empfang eines Sprachsignals, welches Frames mit kodierter Sprache enthält, **dadurch gekennzeichnet, dass** die Terminaleinheit weiterhin Jitter-Buffersteuerungsmittel (50) umfasst, die angepasst sind, die funktionale Größe des Jitter-Buffer (20) durch Vorhalten von Informationen über die funktionale Größe des Jitter-Buffers anzupassen, und zur Bereitstellung der Sprachdekodierungssysteme, wobei weiterhin Informationen über das empfangene, paketierte, kodierte/dekodierte Sprachsignal (40) mit Steuerinformationen genutzt werden, und **dadurch**, dass die Sprachdekodierungsmittel (40), die auf den Informationen basieren, eine dynamische Anpassung der Größe des Jitter-Buffers (20) durch eine Modifikation des kodierten oder dekodierten Sprachsignals verfügbar macht.

**2.** Eine Terminaleinheit nach Anspruch 1, **dadurch gekennzeichnet, dass** die Jitter-Buffersteuerungsmittel (50) Informationen über die aktuelle Größe des Jitter-Buffers (20) und über die gewünschte Größe des Jitter-Buffers (20) nutzt, um festzustellen, ob und wie die Jitter-Buffergröße angepasst werden muss.

**3.** Eine Terminaleinheit nach Anspruch 2, **dadurch gekennzeichnet, dass** die Pakete eine Anzahl von Sprach-Frames enthalten.

**4.** Eine Terminaleinheit nach Anspruch 3, **dadurch gekennzeichnet, dass** ein empfangenes Paket einen Sprach-Frame enthält, der zum Beispiel 160 Samples repräsentiert, wenn er durch die Dekodierungsmittel dekodiert wird.

**5.** Eine Terminaleinheit nach Anspruch 3 oder 4, **dadurch gekennzeichnet, dass** die aktuelle Größe des Jitter-Buffers durch die Anzahl von Samples repräsentiert wird, welche in der empfangenden Terminaleinheit verbleiben, bis das empfangene Paket durch die Kodierungsmittel herangezogen wird, und **dadurch** dass die gewünschte (Default-)Größe des Jitter-Buffers durch die Anzahl der Samples repräsentiert ist, die in der empfangenden Terminaleinheit verbleiben sollen, bis das empfangene Paket durch die Dekodierungsmittel herangezogen werden muss.

**6.** Eine Terminaleinheit nach einem der vorangegangenen Ansprüche, **dadurch gekennzeichnet, dass** die Jitter-Buffer-(20)-Größe durch Kompression oder Verlängerung des empfangenen Sprachsignals in der Zeit angepasst ist.

**7.** Eine Terminaleinheit nach einem der vorangegangenen Ansprüche, **dadurch gekennzeichnet, dass** zur Steuerung der Größe des Jitter-Buffers (20) die Frequenz, mit der die Dekodierungsmittel (50) Pakete aus dem Jitter-Buffer heranziehen, verkleinert/vergrößert wird.

**8.** Eine Terminaleinheit nach einem der vorangegangenen Ansprüche, **dadurch gekennzeichnet, dass** zur Anpassung der Größe des Jitter-Buffers (20) eine Anzahl von Samples hinzuaddiert oder entfernt wird, wenn ein Paket durch die Dekodierungsmittel dekodiert wird.

**9.** Eine Terminaleinheit nach Anspruch 8, **dadurch gekennzeichnet, dass** zur Anpassung der Größe des Jitter-Buffers (20) eine Anzahl von Pitch-Perioden hinzuaddiert oder entfernt wird, wenn ein Paket durch die Dekodierungsmittel dekodiert wird.

**10.** Eine Terminaleinheit nach Anspruch 8,

**dadurch gekennzeichnet, dass** die Anzahl der Frames in dem Paket entweder in den Dekodierungsmitteln oder in dem Jitter-Buffer erhöht/verkleinert wird.

11. Eine Terminaleinheit mindestens nach Anspruch 2, **dadurch gekennzeichnet, dass** die Jitter-Buffersteuerungsmittel die Ankunftszeiten von Paketen in dem Jitter-Buffer und die Zeit erkennt, zu der Pakete durch die Dekodierungsmittel (40) herangezogen werden oder von den Kodierungsmitteln (40) ausgegeben werden müssen, um festzustellen, ob und wie die funktionale Größe der Jitter-Buffergröße angepasst werden muss.

12. Eine Terminaleinheit nach Anspruch 11, **dadurch gekennzeichnet, dass** Feedback-Mittel verfügbar sind, um die Jitter-Buffersteuerungsmittel (50) über die aktuelle Jitter-Buffergröße zu informieren, so dass die Steuerungsmittel immer über aktuelle Informationen hinsichtlich der Jitter-Buffergröße verfügen.

13. Eine Terminaleinheit nach Anspruch 12, **dadurch gekennzeichnet, dass** über die Feedback-Mittel Informationen darüber bei den Jitter-Buffersteuerungsmitteln verfügbar sind, wie viele Samples/Frames/Pitch-Perioden bei der letzten Anpassung der Jitter-Buffergröße hinzuaddiert/entfernt wurden.

14. Eine Terminaleinheit nach einem der Ansprüche 8 bis 13, **dadurch gekennzeichnet, dass** zur Änderung der Anzahl der Samples/Pitch-Perioden das aktuell empfangene Paket genutzt wird.

15. Eine Terminaleinheit mindestens nach Anspruch 9, **dadurch gekennzeichnet, dass** zum Addieren eines Frame zu einem Paket die Parameter der Anzahl der vorangegangenen Frames genutzt werden, um einen neuen Frame zu synthetisieren.

16. Eine Terminaleinheit nach einem der Ansprüche 8 bis 11, **dadurch gekennzeichnet, dass** zum Hinzuaddieren eines Frame durch Einfügen eines Frame Parameter eines vorangegangenen Frame und eines nachfolgenden Frame bei einem Interpolationsschritt zur Erzeugung eines neuen Frame genutzt werden.

17. Eine Terminaleinheit mindestens nach Anspruch 9, **dadurch gekennzeichnet, dass** zum Löschen eines Frame der nachfolgende Frame aus dem Jitter-Buffer gelöscht wird.

18. Eine Terminaleinheit nach einem der vorangegangenen Ansprüche,

**dadurch gekennzeichnet, dass** die Dekodierungsmittel (40) einen CELP-Dekoder oder Ähnliches enthält und dass die dazugehörigen, existierenden Steuerungsmittel als Jitter-Buffersteuerungsmittel genutzt werden.

19. Eine Terminaleinheit nach einem der Ansprüche 1 bis 17, **dadurch gekennzeichnet, dass** sie Mittel zur Ausführung einer LPC-Analyse umfassen, um einen LPC-Restwert zur Ausführung einer LPC-Synthese verfügbar zu machen.

20. Ein Verfahren zur Anpassung der funktionalen Größe eines Jitter-Buffers in einer Terminaleinheit in einem Kommunikationssystem, das Paket basierende Kommunikation von Sprache und Daten unterstützt, mit den folgenden Schritten:

- Empfangen eines Sprachsignals mit kodierter Sprache in Paketen von einer sendenden Terminaleinheit in einen Jitter-Buffer einer empfangenden Terminaleinheit,
- Speicherung der Pakete in dem Jitter-Buffer,
- Heranziehung von Paketen aus dem Jitter-Buffer in Sprachdekodierungsmittel,

**dadurch gekenneichnet, dass** weiterhin die folgenden Schritte enthalten sind:

- Erkennen (230, 231, 240) durch Nutzung von Informationen über das empfangene Signal, ob die Größe des Jitter-Buffers vergrößert oder verkleinert werden muss, und falls ja,
- Erweiterung/Komprimierung des empfangenen Sprachsignals in der Zeit durch Steuerung der Anzahl von Samples, die die Sprach-Frames, die in dem Jitter-Buffer gespeichert sind, repräsentieren würden, wenn sie dekodiert sind.

21. Das Verfahren nach Anspruch 20, **dadurch gekennzeichnet, dass** zur Erweiterung/Komprimierung des Sprachsignals der folgende Schritt umfasst ist:

- Verkleinerung/Vergrößerung der Rate, zu der die Dekodierungsmittel Pakete aus dem Jitter-Buffer heranziehen.

22. Das Verfahren nach Anspruch 20 oder 21, **dadurch gekennzeichnet, dass** zur Anpassung der Größe (232, 250) des Jitter-Buffers folgender Schritt umfasst ist:

- Hinzuaddieren/Entfernen von mehreren Samples, wenn ein Paket in den Dekodierungsmitteln dekodiert wird.

**23.** Das Verfahren nach Anspruch 20, 21 oder 22, **dadurch gekennzeichnet, dass** zum Anpassen der Größe (232, 250) des Jitter-Buffers die folgenden Schritte umfasst sind:

- Addieren von einer oder mehrerer Pitch-Perioden beim Dekodieren in den Dekodierungsmitteln, wenn die Größe des Jitter-Buffers vergrößert werden muss,
und/oder
- Entfernen von einer oder mehrerer Pitch-Perioden in den Dekodierungsmitteln, um die Größe des Jitter-Buffers zu verkleinern.

**24.** Das Verfahren nach Anspruch 20 oder 21, **dadurch gekennzeichnet dass**, der folgende Schritt zur Anpassung der Größe (232, 250) des Jitter-Buffers umfasst ist:

- Hinzufügen/Entfernen von einem oder mehreren Frames zu/von einem Paket.

**25.** Das Verfahren nach einem der Ansprüche 20 bis 24, **dadurch gekennzeichnet, dass** weiterhin der folgende Schritt umfasst ist:

- Erkennen in automatischen Steuerungsmitteln der Zeit der Ankunft von Paketen in dem Jitter-Buffer und der Zeit, zu der Pakete durch die Dekodierungsmittel herangezogen werden oder von den Dekodierungsmitteln ausgegeben werden müssen, um festzustellen, ob und wie die Jitter-Buffergröße angepasst werden muss.

**26.** Das Verfahren nach einem der Ansprüche 19 bis 24, **dadurch gekennzeichnet, dass** der folgende Schritt umfasst ist:

- Nutzung eines CELP- oder CELP-ähnlichen Dekoders zur Anpassungssteuerung, wobei existierende LPC-Parameter genutzt werden, die einen LPC-Restwert ergeben.

**27.** Das Verfahren nach einem der Ansprüche 20 bis 25, **dadurch gekennzeichnet, dass** der folgende Schritt umfasst ist:

- Ausführung einer LPC-Analyse um einen LPC-Restwert vor dem Einfügen/Entfernen von Samples/Frames/Pitch-Perioden zu erhalten.

**Revendications**

**1.** Terminal (11 ; 12) dans un système de communication prenant en charge les communications à base de paquets, comprenant un moyen de réception, un moyen de décodage de la parole (40) et un tampon de gigue (20) pour traiter les variations de retard lors de la réception d'un signal de parole constitué de paquets contenant des trames de parole codée, **caractérisé en ce que** le terminal comprend en outre un moyen de commande de tampon de gigue (50) conçu pour adapter la taille fonctionnelle dudit tampon de gigue (20) en conservant des informations concernant la taille fonctionnelle du tampon de gigue et pour fournir audit moyen de décodage de la parole des informations de commande, en utilisant en outre les informations concernant le signal de parole reçu, mis sous forme de paquets, codé/décodé (40), et **en ce que** le moyen de décodage de la parole (40), sur la base desdites informations, assure une adaptation dynamique de la taille du tampon de gigue (20) en modifiant le signal de parole codé ou décodé.

**2.** Terminal selon la revendication 1, **caractérisé en ce que** le moyen de commande de tampon de gigue (50) utilise des informations concernant la taille courante du tampon de gigue (20) et la taille souhaitée du tampon de gigue (20) pour déterminer s'il est nécessaire d'adapter la taille du tampon de gigue et comment le faire.

**3.** Terminal selon la revendication 2, **caractérisé en ce qu'**un paquet contient un certain nombre de trames de parole.

**4.** Terminal selon la revendication 3, **caractérisé en ce qu'**un paquet reçu contient une trame de parole qui, lorsqu'elle est décodée dans le moyen de décodage, représente par exemple 160 échantillons.

**5.** Terminal selon la revendication 3 ou 4, **caractérisé en ce que** la taille courante du tampon de gigue est représentée par le nombre d'échantillons qui restent dans le terminal de réception jusqu'à ce que le paquet reçu doive être recherché par le moyen de décodage, et **en ce que** la taille souhaitée (par défaut) du tampon de gigue est représentée par le nombre d'échantillons devant rester dans le terminal de réception jusqu'à ce que le paquet reçu doive être recherché par le moyen de décodage.

**6.** Terminal selon l'une quelconque des revendications précédentes, **caractérisé en ce que** la taille du tampon de gigue (20) est adaptée par compression ou décompression du signal de parole reçu dans le temps.

**7.** Terminal selon l'une quelconque des revendications précédentes, **caractérisé en ce que**, pour commander la taille du tampon de gigue (20), la fréquence avec laquelle le moyen de décodage (50) recherche des paquets dans le tampon de gigue est augmentée/réduite.

**8.** Terminal selon l'une quelconque des revendications précédentes, **caractérisé en ce que**, pour adapter la taille du tampon de gigue (20), un certain nombre d'échantillons sont ajoutés ou retirés lorsqu'un paquet est décodé dans le moyen de décodage.

**9.** Terminal selon la revendication 8, **caractérisé en ce que**, pour adapter la taille du tampon de gigue (20), un certain nombre de périodes du fondamental sont ajoutées ou retirées lorsqu'un paquet est décodé dans le moyen de décodage.

**10.** Terminal selon la revendication 8, **caractérisé en ce que** le nombre de trames dans un paquet est augmenté/réduit soit dans le moyen de décodage, soit dans le tampon de gigue.

**11.** Terminal selon au moins la revendication 2, **caractérisé en ce que** le moyen de commande de tampon de gigue (50) détecte les temps d'arrivée de paquets dans le tampon de gigue et le temps lors duquel des paquets sont recherchés par le moyen de décodage (40) ou doivent être délivrés en sortie par le moyen de décodage (40) pour déterminer s'il est nécessaire d'adapter la taille fonctionnelle du tampon de gigue et comment le faire.

**12.** Terminal selon la revendication 11, **caractérisé en ce que** des moyens de contre-réaction sont prévus pour informer le moyen de commande de tampon de gigue (50) de la taille courante du tampon de gigue de façon que ledit moyen de commande reçoive toujours des informations mises à jour en ce qui concerne la taille du tampon de gigue.

**13.** Terminal selon la revendication 12, **caractérisé en ce que**, via le moyen de contre-réaction, des informations sont fournies au moyen de commande de tampon de gigue (50) en ce qui concerne le nombre d'échantillons/trames/périodes du fondamental qui ont été ajoutés/retirés lors de la dernière adaptation de la taille du tampon de gigue.

**14.** Terminal selon l'une quelconque des revendications 8 à 13, **caractérisé en ce que**, pour modifier le nombre d'échantillons/périodes du fondamental, le paquet en cours de réception est utilisé.

**15.** Terminal selon au moins la revendication 9, **caractérisé en ce que**, pour ajouter une trame à un paquet, les paramètres d'un certain nombre des trames précédentes sont utilisés pour synthétiser une nouvelle trame.

**16.** Terminal selon l'une quelconque des revendications 8 à 11, **caractérisé en ce que**, pour ajouter une trame par insertion d'une trame, des paramètres d'une trame précédente et d'une trame suivante sont utilisés lors d'une étape d'interpolation pour produire une nouvelle trame.

**17.** Terminal selon au moins la revendication 9, **caractérisé en ce que**, pour éliminer une trame, la trame suivante est éliminée du tampon de gigue.

**18.** Terminal selon l'une quelconque des revendications précédentes, **caractérisé en ce que** le moyen de décodage (40) comprend un décodeur CELP ou semblable, et **en ce que** ses moyens de commande existants sont utilisés en tant que moyens de commande du tampon de gigue.

**19.** Terminal selon l'une quelconque des revendications 1 à 17, **caractérisé en ce qu'**il comprend un moyen pour effectuer une analyse LPC (pour "Linear Predictive Coding - Codage Prédictif Linéaire") pour produire un résidu LPC permettant d'effectuer une synthèse LPC.

**20.** Procédé d'adaptation de la taille fonctionnelle d'un tampon de gigue dans un terminal d'un système de communication prenant en charge la transmission à base de paquets de parole et de données, comprenant les étapes consistant à :

   - recevoir un signal de parole avec de la parole codée dans des paquets d'un terminal émetteur dans un tampon de gigue d'un terminal récepteur,
   - stocker les paquets dans le tampon de gigue,
   - rechercher des paquets dans le tampon de gigue pour les fournir au moyen de décodage de la parole,

   **caractérisé en ce qu'**il comprend en outre les étapes consistant à :

   - détecter (230, 231, 240) s'il est nécessaire d'augmenter ou de réduire la taille du tampon de gigue en utilisant des informations concernant le signal de parole reçu et, si oui,
   - étendre/comprimer le signal de parole reçu dans le temps en commandant le nombre d'échantillons que les trames de parole stockées dans le tampon de gigue représenteraient lorsqu'elles sont décodées.

**21.** Procédé selon la revendication 20, **caractérisé en ce qu'**il comprend l'étape, pour étendre/comprimer le signal de parole, consistant à :

   - augmenter/réduire la cadence à laquelle le moyen de décodage recherche des paquets dans le tampon de gigue.

**22.** Procédé selon la revendication 20 ou 21, **caracté-**

**risé en ce qu'**il comprend l'étape consistant à, pour adapter la taille (232, 250) du tampon de gigue :

- ajouter/retirer un ou plusieurs échantillons lorsqu'un paquet est décodé dans le moyen de décodage.

**23.** Procédé selon la revendication 20, 21 ou 22, **caractérisé en ce qu'**il comprend les étapes consistant à, pour adapter la taille (232, 250) du tampon de gigue :

- ajouter une ou plusieurs périodes du fondamental lors du décodage effectué dans le moyen de décodage s'il est nécessaire d'augmenter la taille du tampon de gigue, et/ou
- éliminer une ou plusieurs périodes du fondamental dans le moyen de décodage, pour réduire la taille du tampon de gigue.

**24.** Procédé selon la revendication 20 ou 21, **caractérisé en ce que** qu'il comprend l'étape consistant à, pour adapter la taille (232, 250) du tampon de gigue :

- ajouter/retirer une ou plusieurs trames à/d'un paquet.

**25.** Procédé selon l'une quelconque des revendications 20 à 24, **caractérisé en ce qu'**il comprend en outre l'étape consistant à :

- détecter, dans un moyen de commande automatique, les temps d'arrivée de paquets dans le tampon de gigue et les temps lors desquels des paquets sont recherchés par le moyen de décodage ou doivent être délivrés en sortie par le moyen de décodage pour déterminer s'il est nécessaire d'adapter la taille du tampon de gigue et comment le faire.

**26.** Procédé selon l'une quelconque des revendications 19 à 24, **caractérisé en ce qu'**il comprend l'étape consistant à :

- utiliser un décodage CELP ou de type CELP pour la commande d'adaptation en utilisant ainsi des paramètres LPC existants fournissant un résidu LPC.

**27.** Procédé selon l'une quelconque des revendications 20 à 25, **caractérisé en ce qu'**il comprend les étapes consistant à :

- effectuer une analyse LPC pour obtenir un résidu LPC avant d'insérer/retirer des échantillons/trames/périodes du fondamental,
- effectuer une synthèse LPC.

*Fig.1*

*Fig.2*

EP 1 293 072 B1

*Fig.3*

*Fig. 4*

Fig.5

EP 1 293 072 B1

*Fig. 6*

*Fig. 7A*

*Fig. 7B*

*Fig.8A*

*Fig.8B*

*Fig.9A*

*Fig.9B*

Fig.10

**EP 1 293 072 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9615598 A

- WO 99032237 A

**Non-patent literature cited in the description**

- **H. SCHULZRINNE.** RTP; A Transport Protocol for Real-Time Applications. *RFC1889, IETF,* January 1996